# EUROPÄISCHE PATENTANMELDUNG

(11) **EP 1 207 388 A1**
(43) Veröffentlichungstag der Anmeldung: **22.05.2002**
(21) Anmeldenummer: 01126560.0
(22) Anmeldetag: 15.11.2001
(51) Int. Cl.: G01N 21/89

(54) **Ermittlung von Störstellen**

(30) Priorität: 16.11.2000 DE 10057170
(71) Anmelder: MASCHINENFABRIK RIETER AG, 8406 Winterthur (CH)
(72) Erfinder: Hartmeier, Werner, 8307 Effretikon (CH); Furrer, Bernhard, 8404 Winterthur (CH)

(57) **Zusammenfassung**

Die Erfindung betrifft ein Verfahren und eine Vorrichtung zur Ermittlung von Störstellen in Flächengebilden, insbesondere aus Fasern, wobei mittels eines mindestens linienförmig angeordnete Photodioden aufweisenden Signalaufnehmers die Helligkeit des Flächengebildes erfasst und über einem vorbestimmten Schwellwert liegende Helligkeitswerte als Störstellen erkannt werden. Dabei wird das Flächengebilde relativ zum Signalaufnehmer bewegt und die flächenmässige Ausdehnung des über dem vorbestimmten Schwellwert liegenden Helligkeitswertes ermittelt.

## Beschreibung

Die Erfindung betrifft ein Verfahren und eine Vorrichtung zur Ermittlung von Störstellen in Flächengebilden gemäss Oberbegriff der Ansprüche 1 und 20.

In der CH 669 401 A5 ist ein Nissensensor an einem Abnehmer einer Karde beschrieben. Der Sensor umfasst ein Gehäuse, das sich im wesentlichen über die Arbeitsbreite der Maschine erstreckt, wobei das Gehäuse mit Fenstern versehen ist, durch welche einzelne Fotosensoren die Abnehmeroberfläche beobachten können. Diese Fotosensoren liefern je ein Ausgangssignal, welches sich als eine Funktion der Zeit in Abhängigkeit von der sich ändernden, auf den jeweiligen Fotosensor einfallenden Lichtintensität ändert. Die Auswertung ist entsprechend konzipiert, um das kontinuierliche Signal von jedem Fotosensor auszuwerten. Durch eine speziell gewählte Geometrie der Anordnung soll das Beobachten der Garniturspitzen vermieden werden, da sie zur Verfälschung der Ergebnisse beitragen könnten. In der bevorzugten Variante sollte beim Auswerten der gewonnenen Signale nicht nur die Lichtintensität sondern vielmehr der Differentialquotient der Intensitätsveränderung berücksichtigt werden. Es wird auch eine Ausführung vorgesehen, in welcher die einzelnen Sensoren in Gruppen angeordnet werden, wobei die Sensorenanordnung durch einen Antrieb quer zur Transportrichtung des Vlieses bewegt werden kann.

Aus der WO 99/50486 ist eine Vliesüberwachungseinrichtung bekannt, bei welcher in einem Gehäuse ein optoelektronisches Gerät eingebaut ist, welches einen vorbestimmten Fleck eines Flächengebildes beobachten kann. Wie bei einer Lichtquelle wird der Fleck mit Licht beaufschlagt, welches reflektiert und in einer Optik hinsichtlich seiner Intensität ausgewertet wird. Die Intensität des reflektierten Lichtes hängt von der Beschaffenheit des Faservlieses ab, das sich momentan im Bereich des beobachteten Flecks befindet. Ist das beobachtete Faservlies hell oder weist es helle Bereiche auf, so wird mehr Licht reflektiert als wenn das beobachtete Vlies dunkler ist. Nissen, welche aus einer Ansammlung von Fasern bestehen, erscheinen der Optik somit als heller Bereich und werden gemäss der WO 99/50486 als Störstelle ermittelt. Die Anzahl der ermittelten Störstellen wird ausgewertet und mit dem Ergebnis auf die Qualität des Faservlieses rückgeschlossen, auch wenn nur kleine Bereiche des gesamten Vlieses tatsächlich überwacht wurden.

Bei beiden bekannten Verfahren und Vorrichtungen hat sich herausgestellt, dass durch die Einrichtung wesentlich mehr Störstellen ermittelt wurden, als tatsächlich vorhanden waren.

Aufgabe der vorliegenden Erfindung ist es somit, den oben genannten Nachteil zu vermeiden und ein richtiges Mass für die Beurteilung der Qualität des Flächengebildes, insbesondere eines Faservlieses zur Verfügung zu stellen.

Die Aufgabe wird gelöst durch ein Verfahren mit den Merkmalen des Anspruchs 1. Die Flächengebilde, welche bei dem erfindungsgemässen Verfahren auf Störstellen untersucht werden, bestehen insbesondere aus Fasern und werden auf beispielsweise Karden oder Krempeln hergestellt. Eine entsprechende Untersuchung des Flächengebildes kann allerdings auch beispielsweise in Strecken erfolgen, in welchen die Faserbänder zu einem Flächengebilde ausgebreitet werden. In dem erfindungsgemässen Verfahren zur Ermittlung von Störstellen wird die Helligkeit des Flächengebildes mittels eines mindestens linienförmig angeordnete Fotodioden aufweisenden Signalaufnehmers erfasst. Über einem vorbestimmten Schwellwert liegende Helligkeitswerte werden als Störstellen erkannt. Neu und erfinderisch ist es, dass das Flächengebilde relativ zum Signalaufnehmer bewegt wird und dabei die flächenmässige Ausdehnung des über dem vorbestimmten Schwellwert liegenden Helligkeitswertes ermittelt wird. Hierdurch ist es in erfindungsgemässer Weise möglich, aufgrund der Ausdehnung der Helligkeitsunterschiede festzustellen, ob es sich tatsächlich um eine Störstelle oder gegebenenfalls um natürlicherweise, in dem Flächengebilde vorkommende und daher auch akzeptable Helligkeitsunterschiede handelt. Diese natürlichen Helligkeitsunterschiede im Faservlies deuten nicht auf Störungen innerhalb der das Flächengebilde produzierenden Maschine hin und sind somit kein Indiz für einen übermässigen Verschleiss einzelner Bauteile der Maschine, wie es Nissen und Fremdpartikel sind. Würden derartige Helligkeitsunterschiede mit in die Zählung der kleineren Flächen mit grösserer Helligkeit einbezogen werden, so würde eine falsche Bewertung des Verschleisszustandes der Maschine erfolgen und eine Wartung der Maschine zu einem Zeitpunkt erfolgen, zu dem die Wartung noch nicht erforderlich ist. Mit der vorliegenden Erfindung ist es somit möglich, die Wartungsarbeiten an der Maschine genau dann einzuleiten, wenn ein Verschleiss einzelner Bauteile tatsächlich aufgetreten ist. Die Wartungsintervalle können dadurch grösser werden und hierdurch die Kosten der Wartung reduziert werden. Darüber hinaus wird aufgrund vermeidbarer Stillstände der Maschine die Produktivität der Maschine erhöht.

Vorteilhafterweise wird eine Klassierung der Störstelle aufgrund der Anzahl der ansprechenden Dioden und/oder die Ansprechdauer der Dioden vorgenommen. Wird die Klassierung der Störstellen aufgrund dieser Kriterien durchgeführt, so ist eine Unterscheidung zwischen grossflächigen und kleinflächigen Störstellen möglich. Ab welcher Grösse der Störstelle von einer zulässigen Störstelle bzw. einem zulässigen Helligkeitsunterschied ausgegangen wird, hängt von der gewünschten Qualität des Flächengebildes sowie von dem Flächengebilde ansich ab, d.h., welche Störstelle tatsächlich als beispielsweise Nisse zu bewerten ist und kann von Anwendungsfall zu Anwendungsfall unterschiedlich sein.

Vorteilhafterweise wird eine kleine Fläche als tatsächliches Störpartikel erkannt und eine grosse Fläche als zulässige Helligkeitsschwankung innerhalb des Flächengebildes. Derartige Helligkeitsschwankungen treten in einem Faservlies beispielsweise dadurch auf, dass bereits geringfügige Dickenunterschiede des Faservlieses zu einer höheren Lichtremission des Flächengebildes führen. Diese grössere Remission kann als zunehmende Helligkeit registriert werden. Die Erfindung hat erkannt, dass Dickenunterschiede in dem Flächengebilde, welche zu einer höheren Remission führen, an den Fotodioden zwar ebenfalls wie ein tatsächliches Störpartikel eine zunehmende Helligkeit erzeugen. Ein zusätzliches Kriterium, wonach die Unterscheidung in Dickenschwankung und tatsächliches Störpartikel erfolgen kann, besteht allerdings darin, dass die zulässige Dickenschwankung des Faservlieses sich üblicherweise über eine grössere Fläche erstreckt, als ein tatsächliches Störpartikel. Es wird deshalb von der Erfindung in einer vorteilhaften Ausführung vorgeschlagen, dass lediglich Helligkeitsschwankungen, welche flächenmässig gering sind, als Störpartikel registriert werden und Helligkeitsschwankungen, welche auf einer grossen Fläche auftreten, als zulässige Dickenschwankung des Faservlieses registriert werden. Hierdurch ist es gelungen, eine wesentlich realitätsnähere Aussage über den Verschleisszustand der Maschine zu treffen, da die Feststellung der Störstellen wesentlich näher an der Anzahl der tatsächlich in dem Faservlies vorliegenden Störstellen liegt.

Um festzustellen, ob ein bestimmter Helligkeitswert gegenüber dem normalen Helligkeitswert des Flächengebildes erhöht ist, wird ein Mittelwert der Helligkeit des Flächengebildes ermittelt. Abhängig von diesem Mittelwert wird ein Schwellwert festgelegt. Liegt die ermittelte Helligkeit über diesem Schwellwert, so wird ausgehend von der Fotodiode ein Signal erzeugt, welches eine grundsätzliche Störstelle anzeigt.

Als besonders vorteilhaft hat sich erwiesen, wenn der ermittelte Mittelwert mit einem Faktor multipliziert wird und so als Schwellwert für die Störstellenermittlung dient. Hierdurch werden Schwankungen um den Mittelwert herum akzeptiert, ohne dass sie zu einer Anzeige als Störstelle führen. Als Faktor hat sich beispielsweise ein Wert zwischen 1,2 und 1,5 bei einem Faservlies einer Karde als besonders vorteilhaft erwiesen. Dieser Wert kann selbstverständlich unterschiedlich sein, abhängig von der Art des Flächengebildes, von der zu erhaltenden Qualität des Flächengebildes sowie von den verwendeten Fotodioden und deren Empfindlichkeit.

In erfinderischer Weise wird vorgeschlagen, dass der Mittelwert über alle Dioden gebildet und dann über die Zeit gemittelt oder integriert wird. Hierbei wird ein sehr zuverlässiger Mittelwert des kompletten Messkopfes erhalten, wodurch die durch Störstellen hervorgerufenen Abweichungen vom Mittelwert bzw. dem daraus errechneten Schwellwert besonders zuverlässig erfasst werden.

Vorteilhafterweise wird für die Mittelwertbildung die gesamte Spannung der Diodensignale verwendet. Dies bedeutet, dass für Mittelwertbildung nicht nur der Wechselstromanteil der Diodensignale verwendet wird, sondern das komplette Signal.

Wird der Mittelwert über einen Zeitraum gebildet, der einer vorbestimmten Wegstrecke, insbesondere etwa 5 mm des Flächengebildes entspricht, so wird einerseits der Mittelwert genau genug gebildet und andererseits folgt der Mittelwert den natürlichen Helligkeitsschwankungen schnell genug. Dadurch kann die Störstellenerkennung auch bei stark schwankender Vliesdichte zuverlässig erfolgen.

Als besonders vorteilhaft hat es sich erwiesen, dass der Zeitraum für die Mittelwertbildung abhängig von der Abnehmergeschwindigkeit gewählt wird. Auch hierdurch wird die Genauigkeit des Mittelwertes erhöht. Durch die oben genannte erfindungsgemässe Bildung des Mittelwertes ist es möglich, kürzere Zeitkonstanten zu wählen und dadurch den Mittelwert schneller an grossflächige Helligkeitsschwankungen, wie sie beispielsweise durch Vlieswolken bzw. Dickenunterschiede im Faservlies erzeugt werden, anzupassen. Dies ist vorteilhaft, damit in hellen und dunklen Vliespartien die Störpartikel gleich gut erkannt werden können.

Vorteilhafterweise wird jedes einzelne Messsignal von jeder Fotodiode auf das Überschreiten des Schwellwertes überprüft. Es ist damit möglich, bereits sehr kleine Störstellen, beispielsweise ab 0,5 mm Durchmesser zu erkennen. Sind die einzelnen Fotodioden im wesentlichen ohne Zwischenraum angeordnet, so wird eine weitgehend lückenlose Überwachung des untersuchten Fleckes erreicht.

Zur Ermittlung der Breite der Störstelle wird die Anzahl der nebeneinander liegenden Messsignale, die gleichzeitig den Schwellwert überschreiten, ermittelt. Hierdurch wird die komplette Breite der Störstelle festgehalten. Es wird somit nicht jedes einzelne Signal unabhängig vom Nachbarsignal bewertet, sondern es erfolgt eine Bewertung auch der benachbarten Signale, um Rückschlüsse auf die Störstelle zu ziehen. Die Auswertung von benachbarten Dioden ist wesentlich für die Feststellung der Fläche einer zusammenhängenden Störstelle und zur Beurteilung, ob es sich hierbei um eine tatsächliche Störstelle oder um einen grossflächigen Helligkeitsunterschied, beispielsweise eine Vlieswolke im Flächengebilde handelt.

Neben der Ermittlung der Breite der Störstelle kann in einer besonders vorteilhaften Ausführung auch die Länge der Störstelle ermittelt werden, indem die Geschwindigkeit, mit welcher das Flächengebilde an dem Messkopf vorbeibewegt wird und die Zeit, während welcher der Schwellwert überschritten wird, ermittelt wird. Durch die Multiplikation der ermittelten Breite und Länge der Störstelle wird die Fläche der Störstelle berechnet. Hiervon abhängig kann anschliessend die Entscheidung getroffen werden, ob es sich um eine tatsächliche Störstelle oder um eine allgemeine Erhöhung der Helligkeit in dem Flächengebilde, wie sie beispielsweise durch Unterschiede in der Vliesdicke entsteht, handelt.

Als besonders vorteilhaft hat sich erwiesen, dass das Überschreiten einer vorbestimmten Fläche, insbesondere 4 mm² als zulässige Störstelle in einem Faservlies gewertet wird. Ein Helligkeitsunterschied, welcher 4 mm² überschreitet, kann nach den Erfahrungen mit der Erfindung nicht mehr als Störstelle in dem Faservlies gewertet werden. Herkömmliche Störstellen sind nämlich kleiner als 4 mm². Es kann deshalb darauf geschlossen werden, dass diese Helligkeitszunahme nicht aufgrund eines tatsächlichen Störpartikels entstanden ist, sondern aufgrund einer Vlieswolke.

In einer besonders vorteilhaften Ausführung der Erfindung wird vorgesehen, dass das Überschreiten wenigstens eines der beiden Messsignale der äussersten der linienförmig angeordneten Fotodioden nicht als Störstelle gewertet wird. Um nämlich die Anzahl der Störstellen, welche in der erfindungsgemässen Messvorrichtung lediglich statistisch ausgewertet werden, nicht höher erscheinen zu lassen, als tatsächlich Störstellen in dem Flächengebilde vorhanden sind, werden nur Störstellen ermittelt, welche sicher als störende Störstellen erkannt wurden. Zeigen die äussersten Fotodioden eine Helligkeitszunahme an, so kann nicht ausgeschlossen werden, dass die Helligkeitszunahme sich weit über den Messbereich des Messkopfes hinaus erstreckt und somit von einer zulässigen grossflächigen Helligkeitszunahme stammt und nicht von einer Störstelle. Es wird deshalb in der vorteilhaften Ausführung festgelegt, dass, falls die äusserste Fotodiode anspricht, es sich nicht sicher um eine störende Störstelle handelt und deshalb auch nicht in die Klasse dieser Störstellen eingefügt wird. Durch die Methode des Zählens von nur sicheren Störstellen wird vorteilhafterweise verhindert, dass die Anzahl der tatsächlichen Störstellen zu hoch angesetzt wird. Durch die Festlegung einer bestimmten Fläche, welche als Störpartikel gewertet wird, ist es schon vereinzelt möglich, dass in die Zählung Helligkeitszunahmen aufgenommen werden, welche tatsächlich keine Störstelle darstellen. Durch die beschriebene Ausklammerung der seitlich angeordneten Fotodioden in die Zählung wird hier ein gewisser Ausgleich geschaffen, so dass insgesamt die angezeigte Anzahl von tatsächlichen Störstellen sehr realitätsnah möglich ist.

Als vorteilhaft hat sich erwiesen, wenn die Signale des Signalaufnehmers vor der Auswertung verstärkt werden. Hierdurch ist eine exaktere Bewertung, ob das Signal den Schwellwert überschreitet oder nicht, möglich.

Wird das Flächengebilde im zu messenden Bereich, d.h. im Bereich des zu beobachtenden Fleckes, insbesondere von der Seite beleuchtet, so wird eine sichere Signalaufnahme durch die Fotodioden ermöglicht. Durch die seitliche Beleuchtung wird darüber hinaus beim Einsatz gegenüber garnierten Walzen vermieden, dass die Garniturspitzen das Licht in Richtung auf die Fotodioden reflektieren und somit ein Fehlsignal erzeugen, da die Fotodiode die Reflexion als kleinflächige Helligkeitszunahme des Faservlieses anzeigen würde.

Um eine besonders hohe Auflösung des untersuchten Bereiches zu erhalten, ist es vorteilhaft, wenn das zu untersuchende Flächengebilde im Bereich des Signalaufnehmers optisch vergrössert wird. Hierdurch sprechen die Fotodioden bereits bei sehr kleinen Störstellen an.

Besonders vorteilhaft und erfinderisch ist es, wenn in der Messeinrichtung ein Hauptrechner vorgesehen ist, welcher mit dem Messkopf zur Parametrierung, Statusabfrage und Ermittlung einer Störstelle kommuniziert. Es wird damit die zentrale Auswertung der Signale ermöglicht. Ausserdem können mehrere Messköpfe im Bereich des Flächengebildes angeordnet sein und gemeinsam die Beurteilung des Flächengebildes übernehmen. Die verschiedenen Messköpfe werden dann in dem Hauptrechner ausgewertet. Ausserdem ist die Kommunikation vorteilhaft, um an die Messköpfe, beispielsweise die aktuelle Geschwindigkeit des Flächengebildes relativ zum Messkopf weiterzugeben, um hierdurch die Fläche der Störstelle berechnen zu können.

Die Aufgabe wird neben dem erfindungsgemässen Verfahren auch durch eine Vorrichtung mit den Merkmalen des Anspruchs 20 gelöst. Es sind hier mehrere Messköpfe zur Ermittlung von Störstellen in einem von einer Maschine, insbesondere von einer Karde hergestellten Flächengebilde vorgesehen. Die Messeinrichtung weist darüber hinaus einen Hauptrechner auf, mit welchem die Messköpfe in erfindungsgemässer Weise über parallele und serielle Leitungen verbunden sind. Durch diese Verbindungen ist die Kommunikation zwischen den Messköpfen und dem Hauptrechner gegeben. Es ist damit die ständige Übermittlung von Daten möglich und somit kann eine sehr kurze Reaktionszeit auf beispielsweise übermässige Störstellen erfolgen.

Als besonders vorteilhaft hat sich erwiesen, dass die Messköpfe zur Meldung von Störstellen an den Hauptrechner über parallele Leitungen zusammengefasst und mit dem Hauptrechner verbunden sind. Es wird über diese parallelen Leitungen ständig gemeldet, ob eine Störstelle vorhanden ist oder nicht. Das Signal wird allerdings erst dann gesendet, wenn festgestellt wurde, wie gross die Störstelle ist, d. h. erst dann, wenn die Störstelle den Messkopf durchlaufen hat und die Fotodiode wieder einen Wert unterhalb des Schwellwertes feststellt. Die Bewertung im Messkopf und die Mitteilung an den Hauptrechner wird somit etwas verzögert bezüglich der tatsächlichen Störstelle übermittelt.

Zur Parametrierung und/oder zur Statusabfrage der Messköpfe durch den Hauptrechner, sind die Messköpfe mit dem Hauptrechner zusätzlich über serielle Leitungen verbunden. Über diese serielle Verbindung wird den Messköpfen von dem Hauptrechner beispielsweise die Abnehmergeschwindigkeit an der Karde, d. h. die Geschwindigkeit des Flächengebildes in Bezug auf den Messkopf mitgeteilt. Ausserdem wird der Messkopf abgefragt, ob genügend Signalpegel vorhanden ist, d. h., ob der Messkopf überhaupt richtig arbeiten kann, oder ob ein Fehler seitens des Messkopfes vorliegt.

Ist in dem Messkopf zur Signalaufnahme ein Fotodioden-Array vorgesehen, bei welchem einzelne Fotodioden im wesentlichen ohne Zwischenraum aneinander angeordnet sind, so ist eine im wesentlichen lückenlose Überwachung des zu untersuchenden Fleckes möglich.

Sind die Fotodioden im wesentlichen linienförmig aneinander angeordnet, so ist eine einfache Bestimmung der Fläche der Störstelle möglich.

Zur Beleuchtung des zu untersuchenden Fleckes haben sich insbesondere IR-Dioden als vorteilhaft erwiesen. Sind diese insbesondere in einem Winkel von etwa 45° zu den Garniturspitzen der Karde angeordnet, so kann weitgehend ausgeschlossen werden, dass durch Reflexionen des Lichtes an den Garniturspitzen fehlerhaft Störstellen durch die Fotodioden festgestellt werden. Für eine statistische Auswertung des Zustandes des Flächengebildes hat es sich als ausreichend erwiesen, wenn pro Messkopf ein Fotodioden-Array mit 10 Einzeldioden vorgesehen wird.

Um eine statistische Auswertung der Qualität des Flächengebildes durchführen zu können, ist es üblicherweise ausreichend, die Messköpfe in einem bestimmten Abstand voneinander über die Breite des Flächengebildes hinweg anzuordnen. Bei üblichen Karden hat sich als vorteilhaft erwiesen, etwa 5 Messköpfe anzuordnen. Dies bedeutet, dass die Messköpfe einen Abstand von etwa 20 cm voneinander aufweisen.

Um störendes Licht aus der Umgebung der Maschine auszufiltern und nicht in die Beurteilung der Qualität des Flächengebildes einfliessen zu lassen, kann vorteilhafterweise vorgesehen werden, dass ein Tageslichtfilter vor den Dioden angeordnet ist.

Weitere Vorteile der Erfindung sind durch die nachfolgenden Ausführungsbeispiele beschrieben. Es zeigt:
- **Figur 1**: Eine Skizze der wichtigsten Bauteile einer Karde;
- **Figur 2**: eine erfindungsgemässe Einrichtung im Bereich der Abnehmerwalzen;
- **Figur 3**: einen Messbalken in Vorderansicht;
- **Figur 4**: einen Messbalken in Rückansicht;
- **Figur 5**: einen Messkopf;
- **Figur 6**: prinzipielle Darstellung von Störstellen im Messbereich;
- **Figur 7**: das Kamerabild eines Flächengebildes mit den dazugehörigen Messsignalen;
- **Figur 8**: eine Skizze des Funktionsablaufes einer erfindungsgemässen Vorrichtung;
- **Figur 9**: eine Skizze einer erfindungsgemässen abschwenkbaren Vorrichtung.

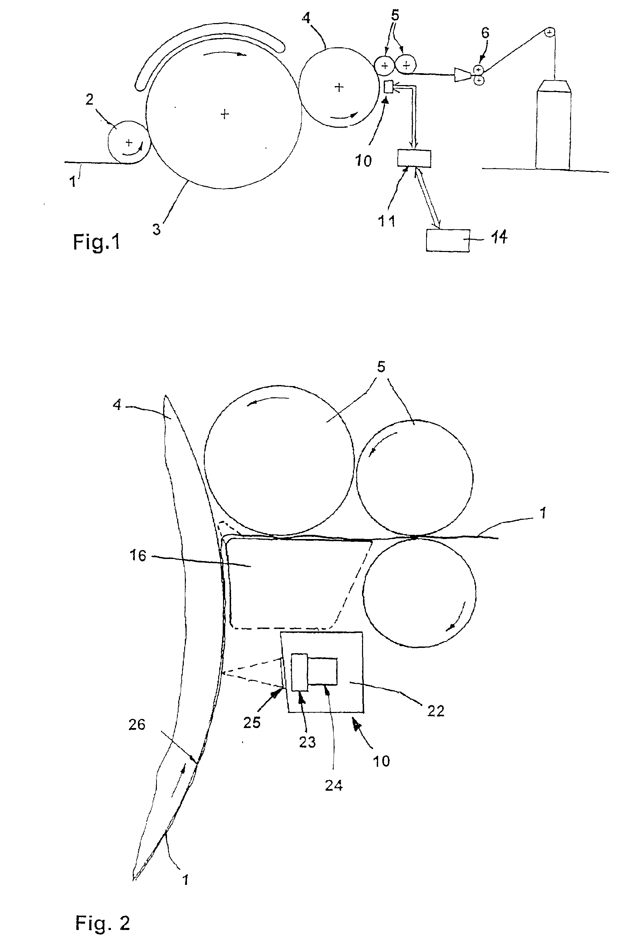

In Figur 1 ist der Aufbau einer Karde, an welcher die erfindungsgemässe Vorrichtung angeordnet ist, dargestellt. Ein Faservlies 1 wird über einen Vorreisser 2 und einen Tambour 3 zu einem Abnehmer 4 geleitet und dort übernommen. Im Bereich dieses Abnehmers 4 ist vor der Abnahme des Faservlieses 1 durch die Abnahmewalzen 5 eine erfindungsgemässe Messvorrichtung 10 angeordnet. Das von den Abnahmewalzen 5 abgenommene Faservlies wird über einen Trichter und Abzugswalzen 6 aus der Karde entnommen und als Faserband in einer Kanne abgelegt. In der Messvorrichtung 10 sind Messköpfe 28 angeordnet, welche über Datenleitungen mit einem Hauptrechner 32 verbunden sind. Messköpfe 28 und Hauptrechner 32 befinden sich zusammen in einem Gehäuse 22 und bilden die gesamte Messvorrichtung 10. Der Hauptrechner 32 ist über ein Feldbussystem, z.B. CAN, Profibus, Interbus, Ethernet etc. mit der Kardensteuerung 11 verbunden. Die Kardensteuerung 11 teilt dem Hauptrechner 32 mit, wann die Kardenproduktion im Gang ist und gemessen werden soll. Der Hauptrechner 32 liefert der Kardensteuerung 11 in regelmässigen Abständen von z.B. 5 Minuten die Resultate der Partikelzählungen zur weiteren statistischen Auswertung.

Die Kardensteuerung 11 kann über ein weiteres Bussystem, z.B. Profibus, Ethernet, etc. mit einem übergeordneten Datensystem 14 in Verbindung stehen. Das übergeordnete Datensystem 14 sammelt die Daten von allen Karden und allenfalls noch weiteren Spinnereimaschinen und stellt sie für Überwachungs- und Vergleichszwecke dar.

In Figur 2 ist ein Ausschnitt aus Figur 1 aus dem Bereich der Abnahmewalzen 5 und der Messeinrichtung 10 dargestellt. Unterhalb der Abnahmewalzen 5 ist ein Leitelement 16 vorgesehen, über welches das Faservlies vom Abnehmer 4 nach der Abnahme geführt wird. Unterhalb des Leitelements 16 ist die Messeinrichtung 10 mit entsprechenden Messköpfen 28 angeordnet. In einem anderen Ausführungsbeispiel wäre es aber ebenso möglich, die Messeinrichtung 10 im Bereich des Leitelements 16 vorzusehen und in dieses zu integrieren. Vorteilhaft ist es, wenn der Messkopf im wesentlichen senkrecht auf den Abnehmer 4 gerichtet ist, um die Störstelle möglichst unverzerrt erfassen zu können.

Die Messeinrichtung 10 weist ein Gehäuse 22 auf, in welchem eine Optik 23 sowie die Fotosensorik 24 untergebracht sind. Vor der Optik 23 ist ein Fenster 25 angeordnet, welches das Gehäuse 22 verschliesst und somit vor Verschmutzung schützt. Von der Optik 23 und der Fotosensorik 24 wird ein Fleck 26 auf der Abnehmerwalze 4 überwacht. An dem Fleck 26 wird durch Drehung des Abnehmers 4 das darauf befindliche Faservlies 1 überwacht. Dadurch, dass in der Optik 23 eine Linse angeordnet ist, wird der Fleck 26 auf die Fotosensorik 24 hin vergrössert. Hierdurch ist eine genauere Erfassung von Störstellen in dem Faservlies 1 möglich, da bereits kleine Störstellen auf eine Grösse gebracht werden, welche von der Fotosensorik erfasst werden können.

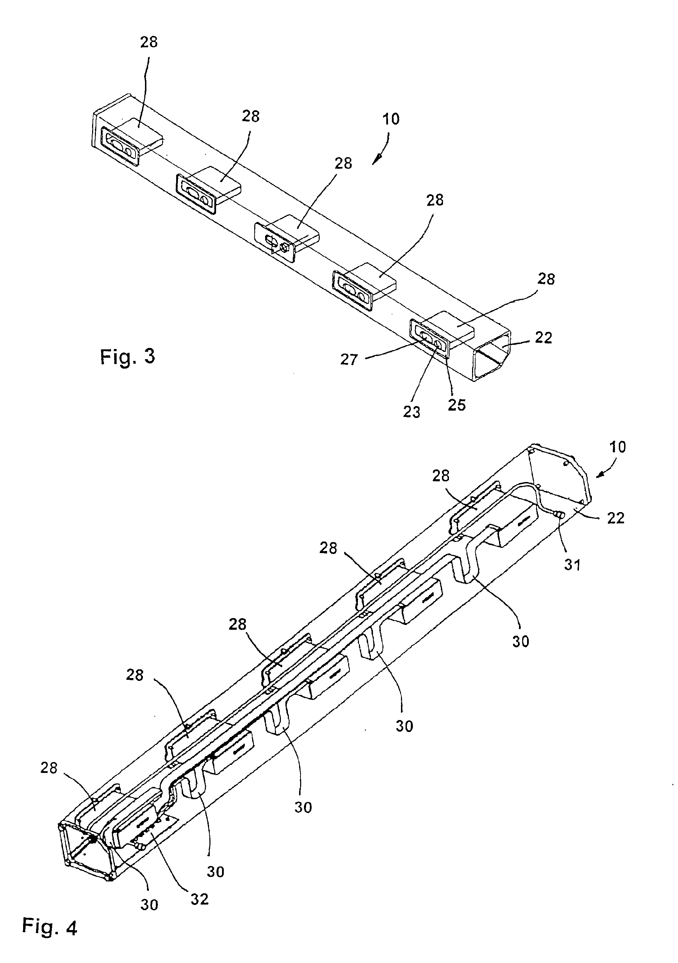

In Figur 3 ist eine Vorderansicht einer Messeinrichtung 10 dargestellt. In dem Gehäuse 22 sind fünf Messköpfe 28 installiert. Jeder der Messköpfe 28 ist mit einem Fenster 25 verschlossen. Hinter dem Fenster 25 ist die Beleuchtung 27 und die Optik 23 angeordnet. Das Gehäuse 22 ist möglichst klein ausgeführt, so dass einerseits der Einbau an der Karde eventuell auch nachträglich durchführbar ist und andererseits aber ausreichend Platz für die einzelnen Messköpfe 28 sowie deren Verkabelung vorhanden ist.

In Figur 4 ist eine Rückansicht der Messeinrichtung 10 dargestellt, wobei aus Übersichtlichkeitsgründen zwei Aussenwände des Gehäuses 22 nicht dargestellt sind. Die fünf Messköpfe 28 sind in einer Aussenwand des Gehäuses 22 mittels Schrauben befestigt. Von jedem der Messköpfe 28 geht ein Buskabel 30, welches aus Platzgründen als Flachbandkabel ausgeführt ist, zu einem Hauptrechner 32, welcher ebenfalls in dem Gehäuse 22 befestigt ist. Die Buskabel 30 sind vorteilhafterweise in Schleifen verlegt, um den Austausch einzelner Messköpfe 28 zu erleichtern. Durch die Schlaufe in dem Buskabel 30 ist es möglich, den einzelnen Messkopf 28 so weit aus dem Gehäuse 22 zu entnehmen, bis der Stecker, mit welchem das Buskabel 30 an dem Messkopf 28 befestigt ist, gelöst werden kann. Ebenfalls in dem Gehäuse 22 angeordnet ist ein Kabel 31, mit welchem Informationen, beispielsweise zur Drehzahl des Abnehmers 4 und damit der Geschwindigkeit, mit welcher das Faservlies 1 an den Messköpfen 28 vorüber läuft, an den Hauptrechner 32 und von dort über das Buskabel an die einzelnen Messköpfe 28 geliefert wird.

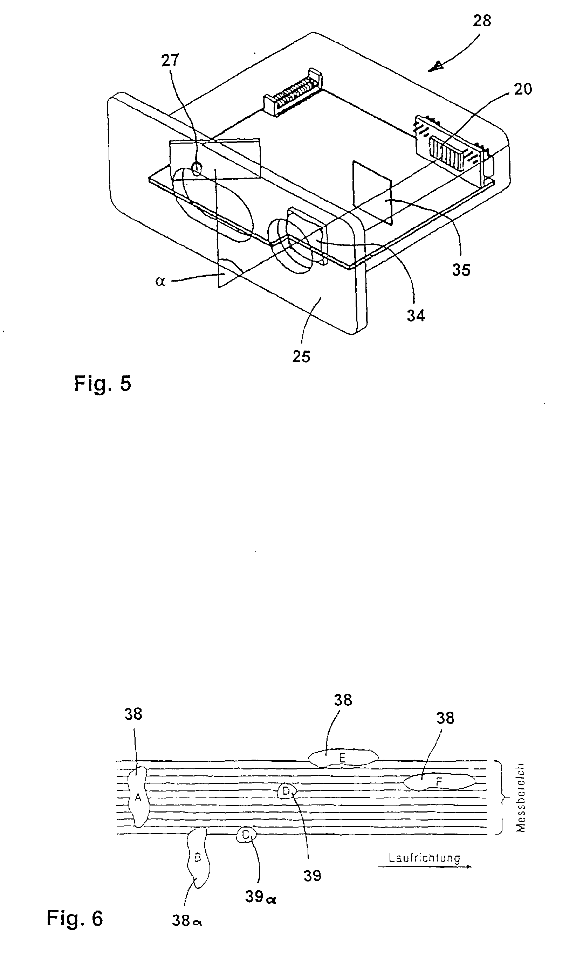

In Figur 5 ist ein Messkopf 28 detaillierter dargestellt. Auf einer Platine ist ein Element mit den Fotodioden 20 befestigt. Zwischen den Fotodioden 20 und dem Fenster 25 ist eine Linse 34 und ein Tageslichtfilter 35 angeordnet. Mittels der Linse 34 wird der zu beobachtende Fleck 26 auf der Abnehmerwalze 4 vergrössert, so dass die Fotodioden 20 eventuelle Störstellen vergrössert dargestellt bekommen und somit ein deutlicheres Signal liefern können. Mittels des Tageslichtfilters 35 wird Streulicht, welches nicht von der speziell vorgesehenen Beleuchtung stammt, ausgefiltert. Weiterhin ist auf der Platine eine Beleuchtung 27 für den zu untersuchenden Fleck 26 angeordnet. Die Beleuchtung 27 besteht aus IR-Dioden, welche in einem Winkel α zu der optischen Achse der Linse 34 und der Fotodioden 20 angeordnet ist. Der Winkel α beträgt im vorliegenden Ausführungsbeispiel 45°, wobei die Beleuchtung 27 seitlich zu der Optik angeordnet ist. Hierdurch wird eine besonders gute Ausleuchtung des Flecks 26 bewirkt und ausserdem eine Reflektion der Garniturzähne des Abnehmers 4 auf die Fotodioden 20 vermieden.

Figur 6 zeigt eine schematische Darstellung verschiedener Störstellen in einem Messbereich. Jede der eingezeichneten Streifen stellt den Beobachtungsbereich einer der Fotodioden 20 dar. Insgesamt sind 10 solcher Fotodioden 20 im vorliegenden Ausführungsbeispiel vorgesehen. Wolken 38 sind flächenmässig grösser ausgebildet, als Nissen 39. Soll die erfindungsgemässe Messvorrichtung für die Ermittlung von Verschleisszuständen an der Karde oder einer Vorgängermaschine eingesetzt werden, so ist es ausreichend, lediglich die Nissen 39 zu ermitteln. Hierzu ist es erforderlich, von den ermittelten Helligkeitsunterschieden gegenüber einem gewissen Mittelwert die Wolken 38 auszunehmen und lediglich die Nissen 39 zu bewerten. Störpartikel 39a könnte ebensogut Teil einer Wolke wie 38a sein und wird deshalb nicht mitgezählt.

Durch eine Auswertung der Signale von den Fotodioden 20 in Verbindung mit der Geschwindigkeit, mit welcher das Faservlies 1 an der Fotodiode 20 vorbei bewegt wird, kann die flächenmässige Ausdehnung der Störstelle ermittelt werden und es kann festgelegt werden, ob es sich dann um eine Wolke 38 oder um eine Nisse 39 handelt. Dies ist sowohl möglich, wenn die Wolken in Längsrichtung als auch, wenn sie in Querrichtung zu dem Messbereich liegen. Gemäss bereits oben beschriebener Vereinbarung kann es vorteilhaft sein, wenn als Nissen 39 nur solche Störstellen gewertet werden, welche einerseits eine geringe flächenmässige Ausdehnung haben und andererseits komplett im Messbereich liegen. Liegt eine Nisse 39a am Rand des Messbereichs, so ist es vorteilhaft, diese nicht als Nisse in der Statistik mit aufzunehmen, da die flächenmässige Ausdehnung nicht bestimmbar ist. Die Störstelle kann sich ausserhalb des Messbereichs entweder noch weit ausdehnen und somit eine Wolke wie 38a darstellen oder aber sie kann unmittelbar ausserhalb des Messbereichs schon wieder beendet sein und somit eigentlich eine Nisse 39 darstellen. Um Zählfehler möglichst gering zu halten, wird vorteilhafterweise vereinbart, dass Störstellen, welche lediglich von der äussersten Fotodiode erfasst werden, nicht als Nissen 39 gezählt werden.

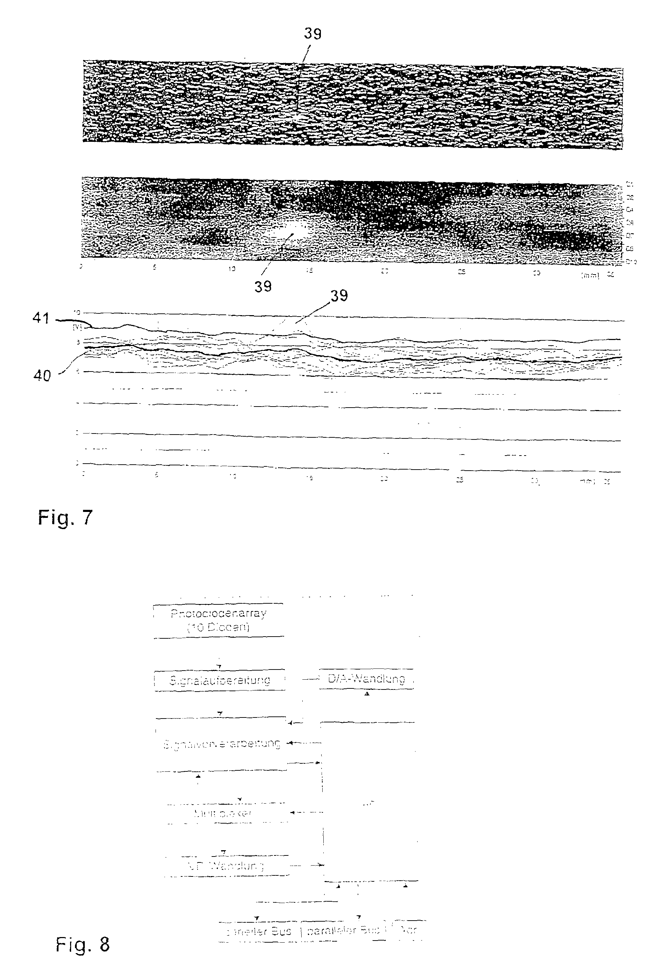

In Figur 7 sind drei Darstellungen eines Faservlieses 1 gezeigt. In der obersten Darstellung ist ein Kamerabild mit einer Störstelle in einem Faservlies 1 aus Baumwolle dargestellt. Der dargestellte Bereich verläuft in Wirklichkeit über ca. 35 mm und wird nach und nach von den Leuchtdioden 20, von denen 10 Stück unmittelbar nebeneinander angeordnet sind, abgetastet. Das mittlere Bild zeigt die zu dem oberen Bild zugehörigen Messsignale der Fotodioden als Helligkeitsunterschiede an. Es wird hier bereits deutlich, dass es Bereiche gibt, welche besonders hell dargestellt sind und andere Bereiche, welche eher dunkel dargestellt sind. In den dunkleren Bereichen ist das Faservlies dünner und reflektiert somit durch die geringere Anzahl weisser Fasern weniger Licht zu den Fotodioden. In den Bereichen, in welchen das Faservlies 1 dicker ist, wird mehr Licht reflektiert und es entstehen somit hellere Bereiche, welche von den Fotodioden erfasst werden. Im Bereich einer Nisse 39 wird ein besonders hoher Helligkeitswert festgestellt. Diese Nisse 39 erscheint in dem mittleren Bild als weisser Fleck.

Im unteren Bild der Figur 7 ist der Signalverlauf der einzelnen Fotodioden dargestellt. Es ist daraus ersichtlich, dass insbesondere im Bereich der Nisse 39 mindestens eine Fotodiode einen deutlich erhöhten Ausschlag aufweist. Dies ist ein typisches Kennzeichen dafür, dass hier eine Nisse 39 vorliegt. Zudem ist der Ausschlag nur kurzzeitig bzw. nur über einen geringen Längenbereich des Faservlieses 1, so dass die Auswertung des Signals ergeben wird, dass hier eine Nisse 39 und nicht eine Wolke 38 vorliegt. Aus dem unteren Bild der Figur 7 ist darüber hinaus noch als untere dick eingezeichnete Linie der aus allen 10 Fotodiodensignalen gebildete Mittelwert 40 ersichtlich. Der Mittelwert 40 ergibt sich in erfindungsgemässer Weise aus den einzelnen Werten der Fotodioden, wobei in vorteilhafter Ausführung der Erfindung der Mittelwert 40 über jeweils 5 mm des durchgelaufenen Faservlieses 1 integriert wird und somit ein Mittelwert 40 über immer gleich grosse Stücke des Faservlieses 1 erhalten wird. Der Mittelwert wird somit stets angepasst an die aktuellen Werte und bewirkt somit, dass ein über dem durchschnittlichen Helligkeitswert liegendes Signal in die Bewertung einfliessen kann. Als Schwellwert 41 wird nicht der fett eingezeichnete Mittelwert 40 genommen, sondern einen bestimmten konstanten Faktor über dem Mittelwert 40 liegender Verlauf des Schwellwertes 41. Als vorteilhaft hat sich hier ein Faktor von etwa 1,2 ergeben. Nur Signalverläufe, welche oberhalb dieses Schwellwerts 41 liegen, werden in die Auswertung mitaufgenommen und beurteilt, ob es sich um eine Nisse 39 oder um eine Wolke 38 handelt.

In Figur 8 ist der prinzipielle Aufbau sowie der Ablauf der Signalverarbeitung eines Messkopfes 28 dargestellt. Auf ein Fotodioden-Array mit 10 Einzeldioden wird ein ca. 5 mm breiter Bereich der Abnehmerwalze 4 der Karde abgebildet. In der Signalaufbereitung werden die Signale der Fotodioden einzeln verstärkt. Anschliessend wird ebenfalls in der Signalvorverarbeitung der Mittelwert der 10 Signale gebildet und mit einer verstellbaren Integrationszeit integriert. Die Integrationszeit wird vom Mikroprozessor eingestellt und hängt von der Umfangsgeschwindigkeit der Abnehmerwalze 4 und damit der Geschwindigkeit, mit welcher das Faservlies 1 an der Messvorrichtung vorübergeleitet wird, ab. Aus dem Mittelwert wird in einem Mikroprozessor der dazugehörige Schwellwert berechnet und über einen D/A-Wandler der Signalvorverarbeitung zugeführt. In der Signalvorverarbeitung werden die Signale der Fotodioden einzeln mit dem vom Mikroprozessor gelieferten Schwellwert verglichen und je ein digitales Signal gebildet, das anzeigt, ob das selektierte Signal über oder unter dem Schwellwert liegt. Die digitalen Signale werden dann dem Mikroprozessor zugeführt.

Zur Überwachung der Fotodioden, z.B. ob ein genügend hoher Signalpegel vorhanden ist, dient ein Multiplexer. Dieser selektiert eines der 10 Messsignale, den Mittelwert über die Messsignale oder den Mittelwert über die Zeit und stellt diese dem A/D-Wandler und der Signalvorverarbeitung zur Verfügung. Es wird somit über den Multiplexer kontrolliert, ob die Messvorrichtung noch funktionstüchtig ist.

Als Schnittstelle zu einem Hauptrechner 32 dienen serielle und parallele Verbindungsleitungen. Die seriellen Leitungen werden für die Parametrierung, z.B. Übermittlung der Abnehmergeschwindigkeit und für die Statusabfrage, z. B. ob ein genügend hoher Signalpegel des Messkopfes vorhanden ist, verwendet. Jedem Messkopf wird eine Adresse zugewiesen, damit er entsprechend identifizierbar und ansprechbar ist. Pro Messkopf ist je eine Leitung im parallelen Bus vorhanden. Darüber meldet jeder Messkopf, ob eine Störstelle vorhanden ist oder nicht. Dieses Signal wird durch die Bewertung, welche im Messkopf erfolgen muss, etwas verzögert an den Hauptrechner 32 weitergegeben, da die Bewertung erst erfolgen kann, wenn die Störstelle den Messkopf vollkommen passiert hat.

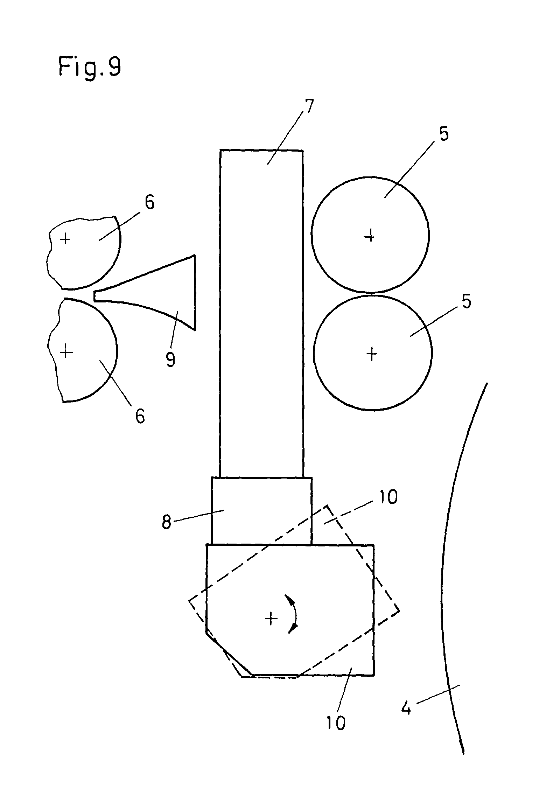

In Figur 9 ist eine erfindungsgemässe Vorrichtung 10 gezeigt, welche zu Reinigungszwecken abschwenkbar ist. Die Messvorrichtung 10 ist an einem Halter angeordnet, welcher mit dem Querbandabzug verbunden ist. Von dem Querbandabzug wird das Faserband aus den Abnahmewalzen 5 abgezogen und zu einem Faserband zusammengeführt. Das Faserband wird dann durch den Trichter 9 den Abzugswalzen 6 zugeführt. Querbandabzug 7, Halter 8, Trichter 9 und Abzugswalzen sind schwenkbar. Durch die Anordnung der Messvorrichtung an dem schwenkbaren Halter ist auch diese verschwenkbar und in der verschwenkten Position (gestrichelte Darstellung) für eine Reinigung zugänglich. Inder gestrichelten Darstellung ist nur die Messvorrichtung 10 aus Gründen der Übersichtlichkeit dargestellt.

Die vorliegende Erfindung ist nicht auf die dargestellten Ausführungsbeispiele beschränkt. Es sind Abwandlungen der Erfindung, insbesondere hinsichtlich des Einsatzgebietes selbstverständlich möglich. Der erfindungsgemässe Sensor und die Verfahrensweise der Auswertung kann auch in einer quer zum Faservlies verfahrbaren Einrichtung angeordnet sein.

## Patentansprüche

1. Verfahren zur Ermittlung von Störstellen in Flächengebilden, insbesondere aus Fasern, wobei mittels eines mindestens linienförmig angeordnete Photodioden aufweisenden Signalaufnehmers die Helligkeit des Flächengebildes erfasst und über einem vorbestimmten Schwellwert liegende Helligkeitswerte als Störstellen erkannt werden, **dadurch gekennzeichnet, dass** das Flächengebilde relativ zum Signalaufnehmer bewegt wird und die flächenmässige Ausdehnung des über dem vorbestimmten Schwellwert liegenden Helligkeitswertes ermittelt wird.

2. Verfahren nach einem der vorherigen Ansprüche, **dadurch gekennzeichnet, dass** eine Klassierung der Störstellen auf Grund der Anzahl der ansprechenden Dioden und/oder der Ansprechdauer der Dioden erfolgt.

3. Verfahren nach einem der vorherigen Ansprüche, **dadurch gekennzeichnet, dass** eine kleine Fläche der Störstelle als echtes Störpartikel und eine grosse Fläche der Störstelle als zulässige Helligkeitsschwankung innerhalb des Flächengebildes gewertet wird.

4. Verfahren nach einem der vorherigen Ansprüche, **dadurch gekennzeichnet, dass** zur Festlegung einer Störstelle ein Mittelwert und eine Schwelle, oberhalb welcher die Signalverarbeitung eine Störstelle anzeigt, gebildet wird.

5. Verfahren nach einem der vorherigen Ansprüche, **dadurch gekennzeichnet, dass** der ermittelte Mittelwert mit einem Faktor multipliziert wird und so als Schwellwert für die Störstellenermittlung dient.

6. Verfahren nach einem der vorherigen Ansprüche, **dadurch gekennzeichnet, dass** der Mittelwert über alle Dioden gebildet und dann über die Zeit gemittelt oder integriert wird.

7. Verfahren nach einem der vorherigen Ansprüche, **dadurch gekennzeichnet, dass** für die Mittelwertbildung die gesamte Spannung der Diodensignale verwendet wird.

8. Verfahren nach einem der vorherigen Ansprüche, **dadurch gekennzeichnet, dass** der Mittelwert über einen Zeitraum gebildet wird, der einer vorbestimmten Wegstrecke, insbesondere etwa 5mm des Flächengebildes entspricht.

9. Verfahren nach einem der vorherigen Ansprüche, **dadurch gekennzeichnet, dass** der Zeitraum abhängig von der Abnehmergeschwindigkeit gewählt wird.

10. Verfahren nach einem der vorherigen Ansprüche, **dadurch gekennzeichnet, dass** jedes Photodiodensignal einzeln auf das Überschreiten der Schwelle überprüft wird.

11. Verfahren nach einem der vorherigen Ansprüche, **dadurch gekennzeichnet, dass** die Breite der Störstelle durch die Anzahl der nebeneinanderliegenden Messsignale, die gleichzeitig den Schwellwert überschreiten ermittelt wird.

12. Verfahren nach einem der vorherigen Ansprüche, **dadurch gekennzeichnet, dass** die Länge der Störstelle durch die Abnehmergeschwindigkeit und die Zeit, während welcher der Schwellwert überschritten wird, ermittelt wird.

13. Verfahren nach einem der vorherigen Ansprüche, **dadurch gekennzeichnet, dass** die Fläche der Störstelle durch Multiplikation der ermittelten Breite und Länge der Störstelle ermittelt wird.

14. Verfahren nach einem der vorherigen Ansprüche, **dadurch gekennzeichnet, dass** das Überschreiten einer vorbestimmten Fläche, insbesondere 4 mm² nicht als Störstelle gewertet wird.

15. Verfahren nach einem der vorherigen Ansprüche, **dadurch gekennzeichnet, dass** bei einem Überschreiten des Schwellwertes wenigstens eines der beiden Messsignale der äussersten, linienförmig angeordneten Photodioden die Störstelle nicht als Störstelle gewertet wird.

16. Verfahren nach einem der vorherigen Ansprüche, **dadurch gekennzeichnet, dass** die Signale des Signalaufnehmers vor deren Auswertung verstärkt werden.

17. Verfahren nach einem der vorherigen Ansprüche, **dadurch gekennzeichnet, dass** das Flächengebilde im Bereich des zu messenden Flächengebildes insbesondere von der Seite beleuchtet wird.

18. Verfahren nach einem der vorherigen Ansprüche, **dadurch gekennzeichnet, dass** das Flächengebilde im Bereich des Signalaufnehmers optisch vergrössert wird.

19. Verfahren nach einem der vorherigen Ansprüche, **dadurch gekennzeichnet, dass** ein Hauptrechner und der Messkopf zur Parametrierung, Statusabfrage und Ermittlung einer Störstelle miteinander kommunizieren.

20. Vorrichtung insbesondere zur Durchführung des Verfahrens nach einem der vorherigen Ansprüche, mit mehreren Messköpfen (28) zur Ermittlung von Störstellen in einem von einer Maschine, insbesondere Karde hergestellten Flächengebilde (1), **dadurch gekennzeichnet, dass** die Vorrichtung einen Hauptrechner (32) aufweist, und die Messköpfe (28) über serielle und/oder parallele Datenleitungen mit dem Hauptrechner (32) verbunden sind.

21. Vorrichtung nach dem vorherigen Anspruch, **dadurch gekennzeichnet, dass** die Messköpfe (28) zur Meldung von Störstellen an den Hauptrechner (32) über einen parallelen Bus zusammengefasst und mit dem Hauptrechner (32) verbunden sind.

22. Vorrichtung nach einem der vorherigen Ansprüche, **dadurch gekennzeichnet, dass** die Messköpfe (28) zur Parametrierung und/oder Statusabfrage durch den Hauptrechner (32) über einen seriellen Bus mit einem Hauptrechner (32) verbunden sind.

23. Vorrichtung nach einem der vorherigen Ansprüche, **dadurch gekennzeichnet, dass** in dem Messkopf (28) zur Signalaufnahme ein Fotodiodenarray vorgesehen ist, bei welchem einzelne Fotodioden (20) im wesentlichen ohne Zwischenraum aneinander angeordnet sind.

24. Vorrichtung nach einem der vorherigen Ansprüche, **dadurch gekennzeichnet, dass** die Fotodioden (20) im wesentlichen linienförmig aneinander angeordnet sind.

25. Vorrichtung nach einem der vorherigen Ansprüche, **dadurch gekennzeichnet, dass** zwischen den Fotodioden (20) und dem abzubildenden Bereich (26) eine Linse (34), insbesondere zur Vergrösserung des abzubildenden Bereiches (26) angeordnet ist.

26. Vorrichtung nach einem der vorherigen Ansprüche, **dadurch gekennzeichnet, dass** Leuchtmittel (27), insbesondere IR-Dioden zur Beleuchtung des abzubildenden Bereiches (26) angeordnet sind.

27. Vorrichtung nach einem der vorherigen Ansprüche, **dadurch gekennzeichnet, dass** das Leuchtmittel (27) seitlich, insbesondere etwa in einem Winkel von 45° zu den Garniturspitzen der Karde angeordnet ist.

28. Vorrichtung nach einem der vorherigen Ansprüche, **dadurch gekennzeichnet, dass** das Fotodiodenarray zehn Einzeldioden (20) aufweist.

29. Vorrichtung nach einem der vorherigen Ansprüche, **dadurch gekennzeichnet, dass** über die Breite des Abnehmers (4) der Karde mehrere, insbesondere fünf Messköpfe (28) angeordnet sind.

30. Vorrichtung nach einem der vorherigen Ansprüche, **dadurch gekennzeichnet, dass** vor den Photodioden (20) ein Tageslichtfilter (35) angeordnet ist.

31. Vorrichtung nach einem der vorherigen Ansprüche, **dadurch gekennzeichnet, dass** die Messvorrichtung (10) verschwenkbar angeordnet ist.
